# EUROPÄISCHE PATENTANMELDUNG

(11) **EP 2 996 066 A1**
(43) Veröffentlichungstag der Anmeldung: **16.03.2016**
(21) Anmeldenummer: 14184252.6
(22) Anmeldetag: 10.09.2014
(51) Int. Cl.: G06K 9/00, B07C 3/14, G06T 7/00

(54) **Verfahren und System zur automatischen optischen Identifikation eines Containers auf Basis seiner Containernummer**

(71) Anmelder: Siemens Aktiengesellschaft, 80333 München (DE)
(72) Erfinder: Dobler, Thomas, 76770 Hatzenbühl (DE); Müller, Tobias, 76351 Linkenheim-Hochstetten (DE)

(57) **Zusammenfassung**

Die Erfindung betrifft ein Verfahren zur Identifikation eines Containers (7, 8) während des Containertransports, wobei der Container wenigstens eine auf dem Container sichtbar aufgebrachte Containernummer (9) aufweist, wobei der Container während des Transports wenigstens eine Videokamera (10) passiert, wobei die Containernummer (9) während des Passierens für eine Prozesszeit t im Aufnahmefeld (A) der Videokamera (10) verbleibt, wobei die wenigstens eine Videokamera (10) über eine Verbindung (11) kommunikationsmäßig mit wenigstens einem Computer (12) verbunden ist, das Verfahren beinhaltend die folgenden Schritte:
a) Aufnahme einer Vielzahl von Videobildern eines passierenden Container (7, 8) innerhalb der Prozesszeit t
b) Speicherung der Vielzahl von Videobildern auf einem Speichermedium zugänglich durch den Computer (12)
c) Extrahieren jeweils einer vorläufigen Zeichenkette (13, 14, 15, 16) der Containernummer (9) durch Anwenden eines optischen Zeichenerkennungsprozesses auf jedes der in der Prozesszeit t aufgenommenen Videobilder
d) Speicherung der jeweils vorläufigen Zeichenketten auf einem Speichermedium zugänglich durch den Computer (12)
e) Bildung einer finalen, die Containernummer repräsentierenden Zeichenkette (17) aus dem Vergleich der vorläufigen Zeichenketten (13, 14, 15, 16).

Die Erfindung betrifft ferner ein optisches System zur Durchführung des o.g. Verfahrens.

## Beschreibung

Die Erfindung betrifft ein Verfahren zur automatischen, optischen Erkennung eines Containers, insbesondere eines Containers in Hafenanlagen, wie sie für das Beladen und Löschen von Schiffen verwendet werden.

Der Warenverkehr, welche mit Containern, insbesondere Schiffscontainern, weltweit abgewickelt wird, steigt ständig an. Containerterminals sehen sich der Aufgabe ausgesetzt, diesen steigenden Containerhandel effektiv abzuwickeln. Dies gilt insbesondere deshalb, weil sich Liegezeiten von Schiffen in den Hafen auf ein Minimum reduzieren sollen. Während des Umschlages von Containern werden diese zwischen den Containerschiffen und den Lagerplätzen hin- und hertransportiert. Dieser Transport geschieht unter anderem mit Kranen, Kranbrücken oder sogenannten AGV (Automated Guided Vehicle). Letztere transportieren die Container zu den Lagerplätzen, die sich nicht in direkter Nähe zu den Kais befinden. Dort werden die Container in der Regel mittel Kranbrücken übereinander gestapelt. An der Transportkette zwischen Schiff und Lagerplatz sind demnach mehrere Transportmittel beteiligt, die in hoher Abhängigkeit voneinander arbeiten. Verzögerungen innerhalb eines Transportabschnittes ziehen Verzögerungen in den anderen Transportabschnitten nach sich. Der Transport- und Lagervorgang wird durch eine Lagerhaltungssoftware unterstützt. Dabei ist es extrem wichtig, dass die Container eindeutig identifiziert werden können. Eine falsche Identifikation eines Containers kann dazu führen, dass er entweder für eine gewisse Zeit auf einem Lagerplatz verloren geht, oder aber an ein falsches Ziel verschifft wird. Beides kann erhebliche Fehlkosten produzieren.

Zur Identifikation der Container sind verschiedenen Verfahren bekannt. So sind magnetische Kennzeichnungen bekannt, die von magnetischen Messeinrichtungen ausgelesen werden können, die sich aber in unmittelbarer Nähe zum Container befinden müssen. Hier gibt es allerdings keine international verbindlichen Standards, so dass nicht davon ausgegangen werden kann, dass alle Logistikunternehmen solche magnetischen Kennzeichnungen unterstützen. Eine weitere Möglichkeit ist die Kennzeichnung von Containern mittels passiver Transpondern (z.B. RFID-Tags). Solche Kennzeichnungssysteme gelten heute noch als zu teuer und anfällig. Sie sind ebenfalls mangels international verbindlicher Standards ebenfalls nicht flächendeckend verfügbar.

Heutzutage erhalten Container ihre Identifikationsnummer, indem diese auf den Containerseiten und dem Containerdach mit einer aufgemalten/lackierten Containernummer versehen werden. Diese ist eindeutig und besteht aus einer Buchstaben- und Zahlenkombination. Die Identifikation der Container erfolgt durch optische Systeme, die die Containernummer über Videokameras einlesen, wobei das Videobild dann mittels Computersysteme einer optischen Zeichenerkennung unterzogen werden, um die Containernummer zu extrahieren, die dann in weiterführenden Lagerhaltungssystemen auswertbar ist. Aber auch diese Systeme haben einen entscheidenden Nachteil. So können diese Nummern nur sehr schwierig lesbar sein, weil sie beispielsweise verschmutzt oder verkratzt sind. Des Weiteren gibt es keine Norm über die Schriftgröße, Schriftfarbe, Hintergrundfarbe oder Ausrichtung der Schrift. Aus diesem Grunde ist beispielsweise bekannt, den Container mit feststehenden Videokameras von zwei oder auch drei Seiten aufzunehmen und damit mehrere Nummern auswerten zu können. Nachteilig hierbei ist, dass mehrere Systeme installiert und unterhalten werden müssen. Zudem sind auch mit dieser Methode Fehler nicht gänzlich ausschließbar. Oft ist es baulich nicht möglich, mehrere Kameras z.B. zwischen Fahrbahnen anzubringen. So kann es beispielsweise zu erheblichen Reflektionen durch Sonnen- oder Flutlicht an der Containerwand kommen, die von einer Kamera nur ungenügend oder gar nicht aufgelöst werden können. Da der Umschlag der Container im Freien erfolgt sind immer auch Licht/Schatten Kombinationen im Schriftfeld der Containernummer vorhanden, die ebenfalls die Fehleranfälligkeit deutliche erhöht. Verstärkt wird diese Problematik dadurch, dass kontrastarme Farbkombinationen zwischen der Schrift der Containernummer und der Hintergrundfarbe des Containers möglich sind, da die Eigentümer der Container (i.d.R. die Reedereien) für die Beschriftungen zuständig sind und Container eines Eigentümers die gleiche Hintergrundfarbe für den Container aufweisen. Diese Hintergrundfarben sollen den Wiedererkennungswert steigern, sie ist aber nicht darauf abgestimmt, ein optimales Kontrastverhältnis zur Containernummer zu erzeugen. Des Weiteren stellen beispielsweise Starkregen, Schneefall, fliegendes Laub potentielle Störungen dar, die sich aus dem Umschlag im Freien ergeben. Ein weiteres Problem kann sich daraus ergeben, dass sich Schmutzpartikel auf der Kameraoptik absetzen, die punktuell einen "blinden Fleck" für das Kamerabild erzeugen. Dies ist dann besonders problematisch, wenn bei einem vorbeifahrenden AGV die Auslösung für ein Videobild beispielsweise getriggert durch einen Auslösesensor (beispielsweise eine Lichtschranke, einen magnetoresitiven Schalter oder durch eine Induktionsschleife) immer an gleicher Stelle erfolgt und sich somit auch diese Störstelle an gleicher Stelle und somit ggf. auf der Containernummer reproduziert.

Der Erfindung liegt daher die Aufgabe zugrunde die vorgenannten Probleme zu beherrschen, zumindest jedoch die Auswirkungen weitgehend zu minimieren und eine reproduzierbare Identifikation von Containernummer zu gewährleisten. Der Erfindung liegt weiterhin die Aufgabe zugrunde die Komplexität existierender der Anlagen zu verringern.

Die Lösung der Aufgabe gelingt durch ein Verfahren zur Identifikation eines Containers mit den Merkmalen des Anspruchs 1. Danach passiert der Container während des Containertransportes - sei der Transport ausgeführt durch einen Kran, durch ein fahrerloses oder durch ein von einem Fahrer geführtes Fahrzeug - eine fest installierte Videokamera. Die Videokamera ist hinsichtlich ihres Aufstellungsortes und ihrer Optik (z.B. Zoom, Brennweite des Objektivs) so aufgestellt, dass die Containernummer, welche auf dem Container angebracht ist beim Transport für eine Prozesszeit t durch das Aufnahmefeld der Kamera geführt wird. Die Containernummer kann dabei aufgemalt oder aufgeklebt sein. Die Videokamera ist kommunikationsmäßig mit einem Computer oder einem Computersystem verbunden. Damit können die von der Videokamera aufgenommenen Bilder auf den Computer übertragen werden und über den Computer auf einem Speichermedium abgelegt werden. Nach dem Verfahren wird nunmehr in einem ersten Schritt eine Vielzahl von Videobildern des Containers und damit auch der Containernummer aufgenommen und zwar solange (Prozesszeit t) wie sich der Container resp. die Containernummer im Aufnahmebereich der Kamera befindet. Die Prozesszeit t läuft ab, sobald sich der Container aus dem Aufnahmefeld, d.h. dem Erfassungsbereich der Kamera bewegt, d.h. dieses Aufnahmefeld verlässt. Die Vielzahl von Videobildern wird in einem nächsten Schritt auf einem Speichermedium vom Computer gespeichert. Die Speicherung erster Videobilder kann dabei parallel mit der Aufnahme weiterer Videobilder ablaufen. Insoweit können die Schritte überlappend ablaufen. In einem weiteren Schritt wird jedes Videobild einer Bildauswertung unterzogen, d.h. in jedem Videobild wir die Containernummer identifiziert und mittels eines optischen Zeichenerkennungsprozesses in Einzelzeichen zerlegt, mit dem Ergebnis, dass aus jedem Bild die Containernummer als eine vorläufige Zeichenkette zur Verfügung steht. Nach Speicherung der Vielzahl vorläufiger Zeichenketten erfolgt die Bildung der finalen Zeichenkette, die die Containernummer repräsentieren soll. Dies geschieht mittels Vergleich der vorläufigen Zeichenketten auf Ebene jedes Zeichens. Haben beispielsweise fünf vorläufige Zeichenketten als Anfangszeichen den Buchstaben "E" erkannt, eine andere vorläufige Zeichenkette als Anfangszeichen aber gar kein Zeichen erkannt, so wird die finale Zeichenkette mit einem "E" als Anfangsbuchstaben gebildet. Sollte statt keines Zeichen in diesem Beispiel die Zahl "8" und in zwei weiteren vorläufigen Zeichenketten ebenfalls die Zahl "8" erkannt worden sein, während in den 3 verbleibenden Zeichenketten der Buchstabe "E" erkannt worden ist, so wird als Anfangszeichen für die Containernummer ebenfalls der Buchstabe E" festgelegt, da als Anfangszeichen für die Containernummer entsprechend festgelegter Nomenklatur ein Buchstabe erwartet wird.

Mit den vorgenannten Verfahrensschritten wird sichergestellt, dass innerhalb der Prozesszeit t eine ausreichende Anzahl von Videobildern aufgenommen wird. Da sich der Container während der Prozesszeit weiterbewegt, wird ferner sichergestellt, dass die Videobilder unter anderen Randbedingungen insbesondere aber anderen Aufnahmewinkeln aufgenommen werden. So können beispielsweise Reflektionen, Schatten, Ausleuchtungsprobleme, die auf einem oder mehreren Videobildern eine Erkennung eines Zeichen noch problematisch erscheinen lassen, auf nachfolgenden Videobildern gar nicht mehr auftreten und damit das Zeichen mit einer guter Treffsicherheit bestimmbar machen. Auch das bereits angesprochene Problem der Verschmutzung des Objektivs kann mit dem hier vorgeschlagenen Verfahren weitestgehend eliminiert werden, da auch hier die Bewegung des Containers im Aufnahmebereich der Kamera dazu führen wird, dass solche Fehler kompensiert werden können. Versuche haben ergeben, dass mit dem hier vorgeschlagene Verfahren so gute Ergebnisse erzielt werden, dass Systeme mit mehreren Kameras, die auf verschiedene Seiten des Containers gerichtet sind, durch das vorgeschlagene Einkamerasystem ersetzt werden könnten.

Nach einem weiteren Aspekt der Erfindung wird die finalen Zeichenkette derart gebildet, dass für jede vorläufige Zeichenkette die Häufigkeit der Zeichen für jede Position innerhalb der Zeichenkette ermittelt wird und die finale Zeichenkette anschließend mit den Zeichen gebildet wird, die an der jeweiligen Position innerhalb der Zeichenkette am häufigsten vorkommen. Wird beispielsweise in vier vorläufigen Zeichenketten er Buchstabe "E" an zweiter Stelle erkannt, in zwei vorläufigen Zeichenketten an dieser zweiten Stelle jedoch der Buchstabe "C", so wird die finale Zeichenkette an der zweiten Stelle den Buchstabe "E" aufweisen.

Nach einem weiteren Aspekt der Erfindung wird das Aufnahmefeld der Videokamera in Abhängigkeit der Transportgeschwindigkeit des Containers gesteuert. Die Steuerung des Aufnahmefeldes der Kamera, also des Erfassungsbereichs der Kamera kann beispielsweise durch ein Kameraobjektiv erfolgen, welches die Einstellung unterschiedlicher Brennweiten zulässt (optischer Zoom). Bei digitalen Videokameras kann es sich allerdings auch - oder zusätzlich zu diesem - um einen sogenannten digitalen Zoom handeln, bei dem es sich im Gegensatz zu einem optischen Zoom um eine, auf einem mathematischen Verfahren beruhende, Vergrößerung oder Verkleinerung des Ausschnittes handelt. Die Transportgeschwindigkeit kann auf verschiedene Weise ermittelt werden. Entweder steht ein zweites Messsystem zur Verfügung, welches der optischen Erfassung durch die Kamera vorgelagert ist und Messwerte für die Transportgeschwindigkeit des Containers an den mit der Kamera verbundenen Computer oder das Computersystem weiterleitet. Das erwähnte zweite Messsystem kann über Sensoren aufgebaut werden, die entweder magnetisch, optisch oder induktiv arbeiten. Die Sensoren können in der Fahrbahn eingelassen sein, oder über Barken am Rand der Fahrbahn die Geschwindigkeit messen. Alternativ wäre auch eine Übertragung der Geschwindigkeit aus der Messung im Fahrzeug selbst z.B. des AGV an das erfindungsgegenständliche System möglich. Alternativ wird eine optische Geschwindigkeitsmessung mit dem erfindungsgegenständlichen System selbst vorgeschlagen. Dazu würden dann vorzugsweise senkrechte Kanten des Fahrzeuges oder des Containers detektiert, extrahiert und gefiltert werden, um dann die Geschwindigkeit aus der Kantenbewegung zu bestimmen. Verfahren der Kantendetektion und - filterung sowie der Geschwindigkeitsmessung mittels Bildanalyse sind aus dem Stand der Technik bekannt.

Auf Basis der nunmehr im System vorhandenen Geschwindigkeit des sich bewegenden Containers kann das Aufnahmefeld (der Aufnahmebereich) der Kamera vom Computer beispielsweise durch ein motorisches Zoom Objektiv gesteuert werden. Ziel der Steuerung des Aufnahmebereiches ist es, dass - für Kameras, die nicht nachgeführt werden - immer gewährleistet ist, dass eine Vielzahl von Videobilder aufgenommen werden können und insoweit sich auch Aufnahmen aus verschiedenen Blickwinkeln ergeben. Höhere Transportgeschwindigkeiten werden demnach weitere Aufnahmebereiche der Kamera hervorrufen.

In vorteilhafter Weise wird die Steuerung des Aufnahmefeldes über die Einstellung der Prozesszeit t erfolgen. D.h. bei vorgebbarer Prozesszeit t, der Verweilzeit des Containers - wenigstens jedoch der Containernummer - im Aufnahmefeld der Kamera, wird der Zoom der Kamera eingestellt. Auf diese Weise wird sichergestellt, dass die Prozesszeit unabhängig von der Geschwindigkeit des sich bewegenden Containers konstant ist und somit immer eine Vielzahl von Videobildern des passierenden Containers aufgenommen und abgespeichert werden können. Es hat sich herausgestellt, dass vorzugsweise die Prozesszeit in den Grenzen von 1 bis 5 Sekunden liegt.

In einer vorteilhaften Ausführungsform kann auch die Videokamera motorisch der Containerbewegung nachgeführt werden. Dazu ist die Kamera schwenkbar gelagert und mit Mitteln versehen, die eine motorische Steuerung erlauben. Dabei kann die Steuerung vom Computer aus erfolgen, oder - bei intelligenten Kamerasystemen - über die Kamera und deren Firmware selbst. Auf diese Weise wird sichergestellt, dass sich das Aufnahmefeld der Videokamera weiter vergrößert und insbesondere sich verändernde Blickwinkel der Kamera auf das zu lesende Objekt ergeben. Je größer die Streuung hinsichtlich des Blickwinkels der Kamera ist, desto höher die Wahrscheinlichkeit, dass die eingangs erwähnten Störeinflüsse durch Reflektion, Schattenbildung etc. mit der Bildung der finalen Zeichenkette korrigiert werden können.

Die oben beschriebenen Eigenschaften, Merkmale und Vorteile dieser Erfindung sowie die Art und Weise, wie diese erreicht werden, werden in Verbindung mit den Figuren näher erläutert.

Hierbei zeigen in schematischer Darstellung:
- FIG 1: den Transportweg von Containern im Hafen
- FIG 2: ein AGV mit Containern und typischen Containernummern
- FIG 3: ein erfindungsgemäßes optisches System mit einer Videokamera
- FIG 4: beispielhaft die Bildung einer finalen Zeichenkette

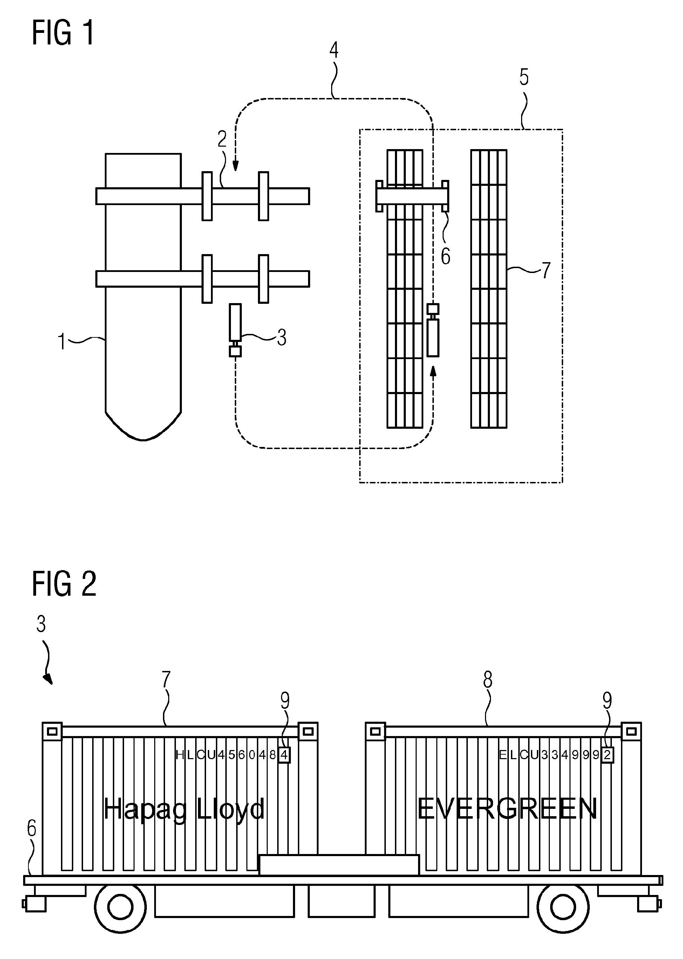

FIG 1 zeigt den allgemeinen Transportweg eines Containers im Hafen. Mittels des Kranes oder der Kranbrücke 2 wird ein Container vom Schiff 1 entladen und auf ein Fahrzeugsystem 3 geladen. Bei dem Fahrzeug kann es sich um ein automatisch geführtes fahrerloses Fahrzeug handeln (AGV = Automatically Guided Vehicle). Das Fahrzeugsystem 3 bringt den oder die Container entlang des Fahrweges 4 zu einem Umschlag- und Lagerplatz 5, auf dem das Fahrzeugsystem 3 über eine weitere Kranbrücke 6 entladen wird und auf dem der Container in eine Stapelanordnung 7 verbracht wird.

FIG 2 zeigt das Fahrzeugsystem 3 bestehend aus dem Fahrzeugtrailer 6 und den Containern 7, 8. Die Container 7, 8, obwohl verschiedenen Eigentümern gehörend (hier beispielhaft die Firmen Evergreen und Hapag Lloyd), tragen jeweils eine alphanumerische, in der Regel mit Farbe aufgemalte oder aufgespritzte, Containernummer 9, über die die Container in elektronischen Bestandsverzeichnissen, -datenbanken geführt werden. Jede Containernummer ist eindeutig und wird nur einmal vergeben, solange sich der Container im Verkehr befindet. Der Fahrzeugtrailer nimmt die Container auf und transportiert diese auf dem Fahrweg 4 zwischen Schiff 1 und Umschlag- und Lagerplatz 5.

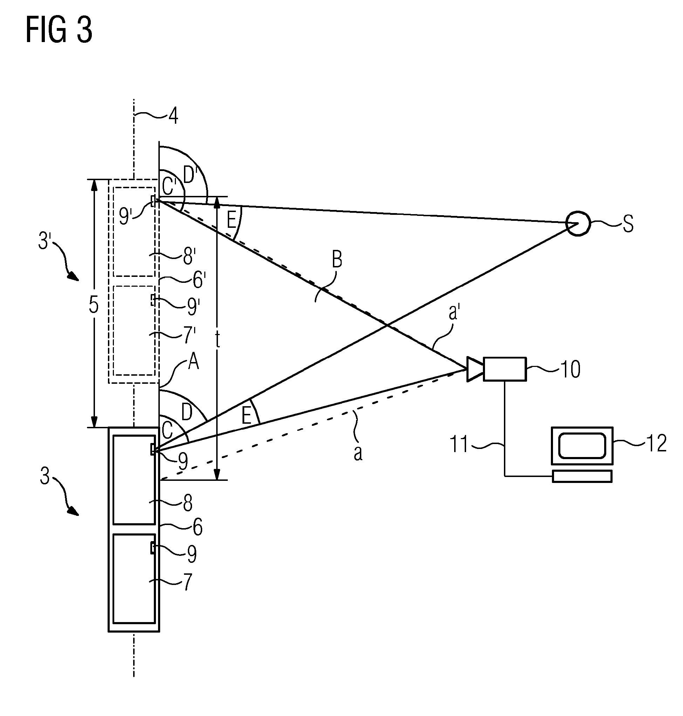

FIG 3 stellt das optische System dar, mit dem die Containernummern automatisch erkannt werden. Dazu befindet sich eine fest installierte Videokamera 10 in seitlichem Abstand zum Fahrweg 4. Die Videokamera ist über die Kommunikationsverbindung 11 mit einem Computer 12 verbunden. Die Kommunikationsverbindung arbeitet vorzugsweise bidirektional, über die Verbindung werden aufgenommene Bilder auf den Computer geladen. Es können aber auch Steuerungsbefehle an die Kamera gesendet werden.

Die Kamera 10 spannt ein rechteckige, pyramidenförmige Aufnahmefeld A auf. Das Aufnahmefeld A ist durch die vertikalen, seitlichen Mantellinien a, a' und die horizontalen Mantellinien (hier nicht gezeigt) begrenzt. Das Fahrzeugsystem 3 in FIG 3 stellt das in FIG 2 gezeigte Fahrzeugsystem in Draufsicht dar. Es bewegt sich entlang des Fahrweges 4 und legt innerhalb der Zeitspanne t den Weg s zurück und durchfährt damit das Aufnahmefeld A der Kamera 10. Sobald sich der Container 8 mit der Containernummer 9 im Aufnahmefeld A befindet startet die Prozesszeit t und läuft solange wie sich die Containernummer 9 im Aufnahmefeld A befindet. Während der Prozesszeit t werden mehrere Aufnahmen von der Containernummer 9 gemacht und von der Kamera 10 an den Computer 12 gesendet, aus denen der Computer 12 mittels optischer Zeichenerkennung für jede Aufnahme eine vorläufige Zeichenkette bildet und abspeichert. Mit jeder Aufnahme ändert sich der Aufnahmewinkel C, C' innerhalb des Aufnahmefelds A bezogen auf die Containernummer 9. Gleichzeitig ändern sich die Winkelverhältnisse D, D' zwischen Containernummer 9 und einer Störquelle S (hier beispielhaft eine Lichtquelle die Reflektionen an der Containernummer 9 auslöst). Und damit ändern sich auch die Winkelverhältnisse E, E' zwischen Aufnahmerichtung und der Richtung des Lichtstrahls, der auf die Containernummer fällt. Die Kamera 10 wird also eine Vielzahl von Bildern aufnehmen, wobei jeweils unterschiedlich Winkelverhältnisse zwischen Störquellen, Objekt und Kamera dazu führen, dass sich Aufnahmebedingungen ändern.

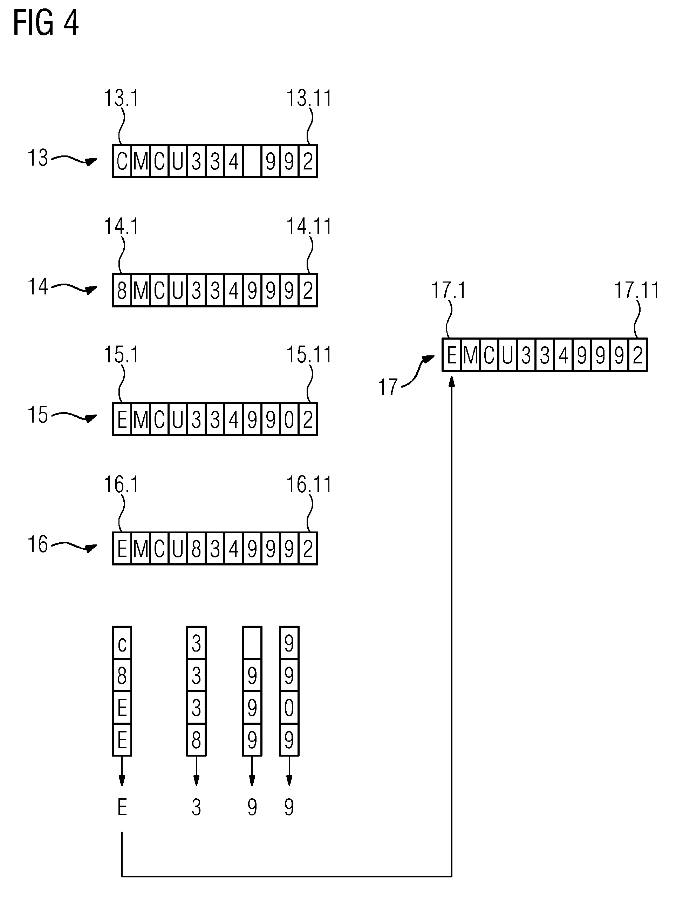

FIG 4 zeigt aus einer Aufnahmeserie von vier Aufnahmen die mittels OCR Zeichenerkennung gebildeten vorläufigen Zeichenketten 13, 14, 15, 16 der Containernummer 9 des Containers 8. Unterschiede in den vorläufigen Zeichenketten wurden erkannt an der ersten, fünften, achten und zehnten Position der Containernummer. Positionsweise wird nunmehr die finale Containernummer 17 zusammengesetzt. Bei der Betrachtung der ersten Position werden die Buchstaben "C" (13.1) und "E" (15.1 und 16.1) sowie die Zahl "8" (14.1) erkannt. Da an dieser Stelle entsprechend der Nomenklatur für Containernummern ein Buchstabe erwartet wird, wird die Position 14.1 in der weiteren Auswertung keine Rolle spielen. Hinsichtlich der verbleibenden Buchstaben wird der Buchstabe "E" am häufigsten genannt, der finalen Zeichenkette 17 wird an der Position 17.1 der Buchstabe "E" zugeordnet. Der restlichen Zeichenkettenpositionen werden ähnlich (in diesem Falle nach der Häufigkeitsverteilung) gebildet. Hinsichtlich des konkreten Algorithmus' der Bildung der finalen Zeichenkette 17 soll die Erfindung allerdings nicht auf das hier angegebenen Beispiel allein beschränkt bleiben. Weitere bekannte Methoden können eingesetzt werden, sowohl für die Bildung der vorläufigen Zeichenketten (z.B. Auswertung von Histogrammen bevor eine OCR Zeichenerkennung durchgeführt wird), als auch für die Bildung der finalen Zeichenkette.

## Patentansprüche

1. Verfahren zur Identifikation eines Containers (7, 8) während des Containertransports, wobei der Container wenigstens eine auf dem Container sichtbar aufgebrachte Containernummer (9) aufweist, wobei der Container während des Transports wenigstens eine Videokamera (10) passiert, wobei die Containernummer (9) während des Passierens für eine Prozesszeit t im Aufnahmefeld (A) der Videokamera (10) verbleibt, wobei die wenigstens eine Videokamera (10) über eine Verbindung (11) kommunikationsmäßig mit wenigstens einem Computer (12) verbunden ist, das Verfahren beinhaltend die folgenden Schritte:
a) Aufnahme einer Vielzahl von Videobildern eines passierenden Container (7, 8) innerhalb der Prozesszeit t
b) Speicherung der Vielzahl von Videobildern auf einem Speichermedium zugänglich durch den Computer (12)
c) Extrahieren jeweils einer vorläufigen Zeichenkette (13, 14, 15, 16) der Containernummer (9) durch Anwenden eines optischen Zeichenerkennungsprozesses auf jedes der in der Prozesszeit t aufgenommenen Videobilder
d) Speicherung der jeweils vorläufigen Zeichenketten auf einem Speichermedium zugänglich durch den Computer (12)
e) Bildung einer finalen, die Containernummer repräsentierenden Zeichenkette (17) aus dem Vergleich der vorläufigen Zeichenketten (13, 14, 15, 16).

2. Verfahren nach Anspruch 1 **dadurch gekennzeichnet, dass** die Bildung der finalen Zeichenkette die folgenden Schritte umfasst:
a) Bestimmen für jede Position innerhalb der vorläufigen Zeichenketten die Häufigkeit jedes einzelnen Zeichens
b) Bilden der finalen Zeichenkette mit den Zeichen jeder Position, welche am häufigsten vorkommen.

3. Verfahren nach Anspruch 1 oder 2 **dadurch gekennzeichnet, dass** das Aufnahmefeld der Videokamera in Abhängigkeit der Transportgeschwindigkeit des Containers gesteuert wird.

4. Verfahren nach Anspruch 3, **dadurch gekennzeichnet, dass** die Prozesszeit t über den Computer einstellbar ist und die Steuerung des Aufnahmefeldes über die Einstellung der Prozesszeit t erfolgt, wobei die Prozesszeit in den Grenzen zwischen 1 und 10 Sekunden liegt.

5. Verfahren nach Anspruch 1 bis 3 **dadurch gekennzeichnet, dass** das Aufnahmefeld der Videokamera motorisch der Containerbewegung nachgeführt ist.

6. Optisches System zur Identifikation einer Containernummer während des Containertransports, das System aufweisend einen Computer und eine kommunikationsmäßig mit dem Computer verbundene Videokamera, wobei der Computer gesteuert wird durch ein Programm, beinhaltend Programmschritte, abgelegt auf einem Speichermedium, welches mit dem Computer gekoppelt ist;
wobei das Programm die Programmschritte umfasst:
a)Aufnahme einer Vielzahl von Videobildern eines passierenden Container innerhalb der Prozesszeit t
b) Speicherung der Vielzahl von Videobildern auf einem Speichermedium zugänglich durch den Computer
c) Extrahieren jeweils einer vorläufigen Zeichenkette der Containernummer durch Anwenden eines optischen Zeichenerkennungsprozesses auf jedes der in der Prozesszeit t aufgenommenen Videobilder
d) Speicherung der jeweils vorläufigen Zeichenketten auf einem Speichermedium zugänglich durch den Computer
e) Bildung einer finalen, die Containernummer repräsentierenden Zeichenkette aus dem Vergleich der vorläufigen Zeichenketten.
